# EUROPEAN PATENT APPLICATION

(11) **EP 4 752 182 A1**
(43) Date of publication of application: **03.06.2026**
(21) Application number: 24215738.6
(22) Date of filing: 27.11.2024
(51) Int. Cl.: C09D 107/00, B60Q 9/00, C08K 3/36, B60C 19/00

(54) **A PROCESS FOR RUBBERISING AN ELECTRONIC DEVICE**

(71) Applicant: Bridgestone Europe NV/SA, 1930 Zaventem (BE)
(72) Inventor: PALUMBI, Maria Cecilia, 00128 Roma (IT)
(74) Representative: Marks & Clerk LLP

(57) **Abstract**

A process for rubberising an electronic device for a tyre and a rubberised electronic device obtained or obtainable therefrom, the process comprising coating the electronic device with a liquid composition.

## Description

### INTRODUCTION

The present invention relates to a process for rubberising an electronic device for a tyre, and to a rubberised electronic device obtained or obtainable therefrom. The present invention also relates to a rubberised electronic device for a tyre, the device comprising a rubber coating. The present invention also relates to methods and uses of the rubberised electronic devices and to tyres comprising the rubberised electronic devices.

### BACKGROUND

Electronic devices are frequently employed to fulfil various roles in tyres. Such devices often need to communicate information about the tyre to a user. For example, radio frequency identification (RFID) sensors in tyres store information about the tyre and the user can obtain this information by interrogating the sensor with a reader.

To enable the signal to arrive at the reader without dissipation, electronic devices such as RFID's are typically insulated with a coating gum compound. Currently, electronic devices are typically sandwiched in a double layer of insulating compound and applied on the tyre either by an embedding process or as a patch on the tyre cavity before curing.

However, this "sandwiching" process suffers from a number of disadvantages. The sandwiched device is highly invasive, and requires the use of large amounts of thick insulating material. Sandwiching also typically results in the formation of defects on the tyre cavity, including colour irregularities and cracking.

There is therefore a need to develop a process for rubberising an electronic device for a tyre which overcomes the problems of traditional sandwiching processes, whilst maintaining the ability of the device to communicate information to the user, e.g. *via* a reader.

### SUMMARY OF THE INVENTION

Viewed from a first aspect, the present invention is directed to a process for rubberising an electronic device for a tyre, the process comprising:
coating the electronic device with a liquid composition; and
allowing the liquid composition to dry on the electronic device, thereby providing a rubberised electronic device,
wherein the liquid composition comprises:
   a rubber composition; and
   a solvent.

Viewed from a further aspect, the present invention relates to a rubberised electronic device obtained or obtainable by a process as hereinbefore described, preferably comprising a coating of the rubber composition on the electronic device having a thickness of less than 0.8 mm, preferably less than 0.6 mm, more preferably less than 0.4 mm, yet more preferably less than 0.25 mm.

Viewed from a further aspect, the present invention relates to a rubberised electronic device for a tyre, the electronic device comprising:
an electronic device and a rubber coating, preferably wherein the coating has a thickness of less than 0.8 mm, preferably less than 0.6 mm, more preferably less than 0.4 mm, yet more preferably less than 0.25 mm.

Viewed from a further aspect, the present invention provides use of rubberised electronic devices as hereinbefore described in tyres.

Viewed from a further aspect, the present invention provides to the use of a rubberised electronic device as hereinbefore described for embedding into a tyre.

Viewed from a further aspect, the present invention provides a method of embedding a rubberised electronic device into a tyre, the method comprising:
providing a rubberised electronic device as hereinbefore described or rubberising an electronic device according to a process as hereinbefore described; and
embedding the rubberised electronic device into a tyre.

Viewed from a further aspect, the present invention provides the use of a rubberised electronic device as hereinbefore described for patching into a tyre.

Viewed from a further aspect, the present invention provides a method of patching a rubberised electronic device onto a patch site of a tyre, the method comprising:
providing a rubberised electronic device as hereinbefore described or rubberising an electronic device according to a process as hereinbefore described; and
patching the rubberised electronic device onto the patch site.

Viewed from a further aspect, the present invention provides a tyre obtained or obtainable by the methods as hereinbefore described and/or a tyre comprising a rubberised electronic device as hereinbefore described.

### DEFINTIONS

As used herein, the term "phr" refers to parts per hundred rubber.

As used herein, the term "rubberised" means coated with a composition comprising a rubber.

As used herein, the term "green" in relation to rubber refers to a rubber which has not been vulcanised, which may also be known as curing or cross-linking.

As used herein, a filler or other compound which is said to be "insulating" preferably increases the dielectric constant of a rubber composition to which it is added. Analogously, a filler or other compound which is said to be "conductive" preferably decreases the dielectric constant of a rubber composition to which it is added. Dielectric constants of a rubber composition can be obtained by analyzing the sample by a vector network analyser (VNA).

### DETAILED DESCRIPTION OF THE INVENTION

The present invention provides a process for rubberising an electronic device for a tyre, the process comprising:
coating the electronic device with a liquid composition; and
allowing the liquid composition to dry on the electronic device, thereby providing a rubberised electronic device,
wherein the liquid composition comprises:
   a rubber composition; and
   a solvent.

The process is preferably a process for insulating the electronic device.

The process of the present invention contrasts with traditional sandwiching processes for the insulation of electronic devices for tyres. In a traditional process, the electronic device is merely sandwiched - i.e. reversibly positioned - in a double layer of insulating compound. In contrast, in the process of the present invention the electronic device is rubberised such that a rubber coating is directly adhered to the device.

Accordingly, the process of the present invention applies liquid rubber by a process similar to the one used for the production of candles. The sandwiching is thus replaced by a casting or dip-coating process on the surface of the electronic device.

An electronic device coated in this way with a rubber coating or film on its surface presents a reduced thickness and lower weight, and is a less invasive system, as compared with traditional sandwiched devices. The process of the present invention also reduces the required amount of rubber material.

It has also been found that the process of the present invention overcomes the defects associated with the use of traditional sandwiching processes such as colour irregularities and cracking. At the same time, it has been found that device readability is maintained, meaning that function is not negatively impacted. It will thus be understood that the process of the present invention is preferably not a sandwiching process.

The process of the present invention is for rubberising an electronic device for a tyre. The electronic device is preferably an electronic sensor device, which includes devices configured to measure, record, and/or communicate information about the tyre. Such information may include, but is not limited to, tyre logistics information, tyre tracking information, tyre identity information, tyre usage information, and/or tyre property information.

Preferably, the electronic device is an electronic communication device. For example, the electronic device is preferably a device which communicates information about the tyre to a user. Preferred properties are as discussed above. Preferably, communication is achieved, or configured to be achieved, by interrogation by an electronic device reader. It has been found that the process of the present invention maintains a good level of device communication, in particular with external readers. In other words, the process maintains a good level of readability.

It is particularly preferred that the electronic device is an RFID.

The electronic device is preferably a device which is suitable for patching and/or embedding into a tyre.

Devices for tyres are sometimes provided with a layer or coating of material by the device manufacturer, which may serve roles such as to promote adhesion between the material of the device and the rubber of the tyre. For example, coatings comprising or consisting of a water-based composition of resorcinol, formaldehyde, and an aqueous latex (known as RFL) are sometimes used to promote adhesion between textile materials and the rubber of the tyre. As another example, materials such as Chemlok^{®} are sometimes used to promote adhesion between metal and the rubber of the tyre. While performing an adhesion role, these materials are not used for insulating a signal from an electronic device. The process of the present invention can be applied to electronic devices pre-coated in this manner. The present invention therefore encompasses methods of rubberising devices which have already been provided with such a coating of a material such as RFL, Chemlok^{®}, or any other material used to enhance adhesion with rubber compounds.

The process of the present invention comprises a step of coating the electronic device with a liquid composition comprising a rubber composition and a solvent. Coating may be achieved by a number of different methods, examples of which are discussed below.

Coating may comprise applying the liquid composition to the electronic device. Means for achieving this may include brushing the liquid composition onto the electronic device, and/or pouring the liquid composition onto the electronic device.

Preferably, coating comprises immersing the electronic device in the liquid composition. Means for achieving this include partially or fully submerging the electronic device in the liquid composition, for example in a bath or container containing the liquid composition. The step of coating may therefore be a dip-coating process.

By coating the electronic device with the liquid composition, the electronic device is provided with a rubber coating directly adhered to the electronic device. Such a coating process uses less rubber material than a traditional sandwiching process and provides a less invasive, lower weight system for use in a tyre. The use of the liquid composition also desirably permits relatively uniform coating.

The liquid composition used in the coating step comprises a rubber composition. As used herein, the term "elastomer" and "rubber" may be used interchangeably herein to describe the polymeric base material for the rubber compositions. Accordingly, it will be understood that the rubber composition comprises an elastomer, or said equivalently, a rubber. The rubber composition may comprise just one elastomer, or may comprise a plurality of different elastomers. Elastomers may be, for example, natural rubber, polybutadiene, synthetic polyisoprenes, butadiene copolymers, isoprene copolymers, copolymers of styrene and butadiene, and mixtures thereof. The rubber composition may also comprise one or more further additives. The components of the rubber compositions are provided in parts per hundred rubber (phr), which means parts by weight per hundred parts of elastomer (i.e. the total elastomers, as several elastomers may optionally be present).

The rubber composition may comprise a diene rubber, such as one or more selected from the group consisting of natural rubber, synthetic polyisoprene, and diene rubber co-polymers. Preferably, the rubber composition comprises one or more of natural rubber, butadiene rubber and styrene-butadiene rubber.

It is particularly preferred that the rubber composition comprises natural rubber. Natural rubber may preferably be provided in the form of bales and/or in the absence of liquid. For example, the natural rubber may have a solids content of greater than 80%, greater than 90%, greater than 95%, greater than 97%, greater than 99%, or about 100%. The amount of natural rubber in the rubber composition may preferably be between 20 to 100 phr, more preferably 50 to 100 phr, still more preferably 75 to 100 phr, still more preferably 90 to 100 phr, yet more preferably 95 to 100 phr, e.g. 98 to 100 phr. Natural rubber may optionally be the only rubber or elastomer ingredient in the rubber composition. In other words, the amount of natural rubber is optionally about 100 phr.

It is preferred that the rubbers or rubber compositions of the present invention do not comprise a latex; i.e. an aqueous dispersion of the elastomer.

The rubber composition used in the present invention preferably comprises green rubber. It is more preferred that any rubber present in the rubber composition is green rubber. As compared with cross-linked cured rubber, green rubber has increased solubility, especially in organic solvent, making it more suitable for use in the process of the present invention.

The rubber composition is preferably an insulating rubber composition. The process can thus be considered a process for insulting an electronic device for a tyre. Insulating is advantageous in better allowing a signal from an electronic device to arrive at a reader without dissipation. The rubber composition preferably has a dielectric constant (also known as relative permittivity) comprised in the range of less than 10, preferably from 0.5 to 7, more preferably from 2 to 5, for example 2, 3, 4, or 5.

The rubber composition preferably comprises an insulating compound. It will be understood that the insulating compound is preferably an additive to the rubber composition. The presence of the insulating compound may make the rubber composition more suitable for insulating the electronic device. The rubber composition preferably comprises an insulating compound in an amount of from 30 to 90 phr, more preferably from 40 to 85 phr, still more preferably from 50 to 80 phr, still more preferably from 60 to 75 phr, e.g. about 70 phr. The rubber composition preferably comprises an insulating compound in an amount of at least 30 phr, more preferably at least 40 phr, still more preferably at least 50 phr, still more preferably at least 60 phr, e.g. at least 70 phr.

Preferably, the total amount of insulating compounds in the rubber composition is between 30-90 phr, more preferably from 40 to 85 phr, still more preferably from 50 to 80 phr, still more preferably from 60 to 75 phr, e.g. about 70 phr. Preferably, the total amount of insulating compounds in the rubber composition is at least 30 phr, more preferably at least 40 phr, still more preferably at least 50 phr, still more preferably at least 60 phr, e.g. at least 70 phr.

The insulating compound may be a filler, i.e. an insulating filler (or non-conducting filler). Preferred examples of fillers which may serve as the insulating compound are selected from silica-based fillers, e.g. silica; aluminium-based fillers, e.g. aluminium hydroxide; calcium-based fillers, e.g. calcium carbonate; barium-based fillers, e.g. barium sulphate; and white non-reinforcing fillers, e.g. clay, kaolin and talc. Silica-based fillers, e.g. silica, are particularly preferred.

Accordingly, the rubber composition preferably comprises a filler, preferably an insulating filler (or non-conducting filler), preferably selected from silica-based fillers, e.g. silica; aluminium-based fillers, e.g. aluminium hydroxide; calcium-based fillers, e.g. calcium carbonate; barium-based fillers, e.g. barium sulphate; and white non-reinforcing fillers, e.g. clay, kaolin and talc. Silica-based fillers, e.g. silica, are particularly preferred. Preferably, any such filler is present in an amount of from 30 to 90 phr, more preferably from 40 to 85 phr, still more preferably from 50 to 80 phr, still more preferably from 60 to 75 phr, e.g. about 70 phr. Alternatively, preferably any such filler is present in an amount of at least 30 phr, more preferably at least 40 phr, still more preferably at least 50 phr, still more preferably at least 60 phr, e.g. at least 70 phr.

Preferably, the total amount of filler in the rubber composition is from 30 to 90 phr, more preferably from 40 to 85 phr, still more preferably from 50 to 80 phr, still more preferably from 60 to 75 phr, e.g. about 70 phr. Preferably, the total amount of insulating filler (or non-conducting filler) in the rubber composition is from 30 to 90 phr, more preferably from 40 to 85 phr, still more preferably from 50 to 80 phr, still more preferably from 60 to 75 phr, e.g. about 70 phr. Preferably, the rubber composition comprises one or more fillers selected from silica-based fillers, e.g. silica; aluminium-based fillers, e.g. aluminium hydroxide; calcium-based fillers, e.g. calcium carbonate; barium-based fillers, e.g. barium sulphate; and white non-reinforcing fillers, e.g. clay, kaolin and talc, preferably wherein the total amount of such fillers is from 30 to 90 phr, more preferably 40-85 phr, still more preferably from 50 to 80 phr, still more preferably from 60 to 75 phr, e.g. about 70 phr.

Preferably, the total amount of filler in the rubber composition is at least 30 phr, more preferably at least 40 phr, still more preferably at least 50 phr, still more preferably at least 60 phr, e.g. at least 70 phr. Preferably, the total amount of insulating filler (or non-conducting filler) in the rubber composition is at least 30 phr, more preferably at least 40 phr, still more preferably at least 50 phr, still more preferably at least 60 phr, e.g. at least 70 phr. Preferably, the rubber composition comprises one or more fillers selected from silica-based fillers, e.g. silica; aluminium-based fillers, e.g. aluminium hydroxide; calcium-based fillers, e.g. calcium carbonate; barium-based fillers, e.g. barium sulphate; and white non-reinforcing fillers, e.g. clay, kaolin and talc, preferably wherein the total amount of such fillers is at least 30 phr, more preferably at least 40 phr, still more preferably at least 50 phr, still more preferably at least 60 phr, e.g. at least 70 phr.

The insulating compound may preferably be selected from a silica-based compound, e.g. silica; an aluminium-based compound, e.g. aluminium hydroxide; a calcium-based compound, e.g. calcium carbonate; a barium-based compound, e.g. barium sulphate; clay; kaolin; and talc. It is particularly preferred that the insulating compound is a silica-based compound, e.g. silica.

Accordingly, the rubber composition preferably comprises at least one of a silica-based compound, e.g. silica; an aluminium-based compound, e.g. aluminium hydroxide; a calcium-based compound, e.g. calcium carbonate; a barium-based compound, e.g. barium sulphate; clay; kaolin; and talc. Preferably, any such compound is present in an amount of from 30 to 90 phr, more preferably from 40 to 85 phr, still more preferably from 50 to 80 phr, still more preferably from 60 to 75 phr, e.g. about 70 phr. Preferably the total amount in the rubber composition of compounds selected from a silica-based compound, e.g. silica; an aluminium-based compound, e.g. aluminium hydroxide; a calcium-based compound, e.g. calcium carbonate; a barium-based compound, e.g. barium sulphate; clay; kaolin; and talc is from 30 to 90 phr, more preferably from 40 to 85 phr, still more preferably from 50 to 80 phr, still more preferably from 60 to 75 phr, e.g. about 70 phr.

As noted, the rubber composition preferably comprises at least one of a silica-based compound, e.g. silica; an aluminium-based compound, e.g. aluminium hydroxide; a calcium-based compound, e.g. calcium carbonate; a barium-based compound, e.g. barium sulphate; clay; kaolin; and talc. Preferably, any such compound is present in an amount of at least 30 phr, more preferably at least 40 phr, still more preferably at least 50 phr, still more preferably at least 60 phr, e.g. at least 70 phr. Preferably the total amount in the rubber composition of compounds selected from a silica-based compound, e.g. silica; an aluminium-based compound, e.g. aluminium hydroxide; a calcium-based compound, e.g. calcium carbonate; a barium-based compound, e.g. barium sulphate; clay; kaolin; and talc is at least 30 phr, more preferably at least 40 phr, still more preferably at least 50 phr, still more preferably at least 60 phr, e.g. at least 70 phr.

As mentioned, it is particularly preferred that the rubber composition comprises, preferably as the insulating compound, a silica-based filler or silica-based compound, preferably silica. The rubber composition preferably comprises a silica-based filler or silica-based compound, preferably silica, in an amount of from 30 to 90 phr, more preferably from 40 to 85 phr, still more preferably from 50 to 80 phr, still more preferably from 60 to 75 phr, e.g. about 70 phr. The rubber composition preferably comprises a silica-based filler or silica-based compound, preferably silica, in an amount of at least 30 phr, more preferably at least 40 phr, still more preferably at least 50 phr, still more preferably at least 60 phr, e.g. at least 70 phr.

It is preferred in the present invention that a silica-based filler or silica-based compound is silica (SiO₂). Alternative silaceous fillers or silaceous compounds that are suitable also include precipitated amorphous silica, wet silica (hydrated silicic acid), dry silica (anhydrous silicic acid), fumed silica, calcium silicate, aluminum silicate, magnesium silicate (e.g., Mg₂SiO₄, MgSiO₃), magnesium calcium silicate (CaMgSiO₄), aluminum calcium silicate (e.g., Al₂O₃.CaO₂SiO₂).

It is preferred in the present invention that an aluminium-based filler or aluminium based compound is alumina (Al₂O₃) or aluminium hydroxide (e.g. Al(OH)₃).

The rubber composition may optionally comprise one or more conductive fillers, examples of which include carbon-based fillers, such as carbon black, graphite, graphene, and carbon nanotubes, particularly carbon black. The carbon black may be furnace black, channel blacks, and lamp blacks. For example, the carbon black may be one or more selected from the group consisting of super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks which may be used include acetylene blacks. The carbon black may be in pelletized form or an unpelletized flocculent mass. A specific example of the carbon black in the rubber compositions of the present invention is CORAX^{®} N234 by Orion Engineered Carbons.

It is preferred that the composition comprises less conductive filler than insulating filler, on a phr basis. This may improve the insulating properties of the rubber composition. Conductive filler may preferably represent less than 10% of the total amount of filler on a phr basis, more preferably less than 8%, still more preferably less than 6%, still more preferably less than 4%, still more preferably less than 2%, still more preferably less than 0.5%, still more preferably about 0% of the total amount of filler in the rubber composition, on a phr basis.

The rubber composition may optionally not comprise a conductive filler. The rubber composition may optionally comprise less than 50 phr, less than 35 phr, less than 20 phr, less than 10 phr, less than 5 phr, less than 2 phr, or about 0 phr conductive filler.

As mentioned, the rubber composition may comprise one or more additives. Preferred additives are selected from: one or more reinforcing filler components, for example silica; one or more antioxidants or stabilisers, for example 2,2,4-Trimethyl-1,2-dihydroquinoline polymer (TMQ) and/or N-(1,3-dimethylbutyl)-N'-phenyl-p-phenylenediamine (6PPD); one or more tackifiers, for example Koresin^{®} or Ribetack; one or more resin components; one or more plasticiser or oil components; one or more adhesion promoters, such as cobalt; bismaleimides (BMI); one or more coupling agents, for example silane; one or more crosslinking or vulcanisation agents, for example sulfur; one or more activators, for example zinc oxide; one or more accelerators, for example Diphenylguanidine (DPG)N-cyclohexyl-2-benzothiazolesulfenamide (CBS), N-tert-butyl-benzothiazole sulphonamide (TBBS), benzothiazyl disulphide (MBTS), N,N-dicyclohexyl-2-benzothiazolesulfenamide (DCBS), and/or tetrabenzylthiuram disulfide (TBzTD); and/or one or more dispersing agents, for example stearic acid. Particularly preferred additives are: Zinc Oxide, Stearic Acid, Silane, Resin, Oil, Cobalt, 6PPD, Sulfur, CBS, DPG, TMQ, and/or BMI.

The rubber composition preferably comprises one or more oils, preferably selected from: polyolefinic oils, naphthenic oils, paraffinic oils, DAE (Distillate Aromatic Extracts) oils, MES (Medium Extracted Solvates) oils, and TDAE oils (Treated Distillate Aromatic Extracts), RAE oils (Residual Aromatic Extract oils), TRAE oils (Treated Residual Aromatic Extract), SRAE oils (Safety Residual Aromatic Extract oils), mineral oils, and vegetable oils. The amount of oil may preferably be between 0 to 20 phr, more preferably 1 to 18 phr, still more preferably 2 to 15 phr, e.g. 3 to 12 phr. A particularly preferred range is 0 to 10 phr. The rubber composition may alternatively or additionally comprise one or more plasticisers selected from ether plasticizers, ester plasticizers, phosphate plasticizers, and sulfonate plasticizers.

The rubber composition may comprise one or more hydrocarbon resins. Resins are compounds that are solid or highly viscous at standard ambient temperature and pressure (25°C, 10⁵ Pa). Hydrocarbon resins are essentially based on carbon and hydrogen but may comprise other types of atoms. They can be aliphatic, cycloaliphatic, aromatic, hydrogenated aromatic, and aliphatic/aromatic, i.e. based on aliphatic and/or aromatic monomers. Hydrocarbon resins can also be qualified as thermoplastic resins in the sense that they soften on heating and can thus be moulded.

Preferred examples of such hydrocarbon resins include those selected from the group consisting of cyclopentadiene homopolymer or copolymer resins (abbreviated as CPD), dicyclopentadiene homopolymer or copolymer resins (abbreviated as DCPD), terpene homopolymer or copolymer resins, rosinic resins, C₅ homopolymer or copolymer resins which may preferably be partially or fully hydrogenated, C₉ homopolymer or copolymer resins which may preferably be partially or fully hydrogenated, alpha-methylstyrene homopolymer or copolymer resins, phenolic resins such as bismaleimide (BMI) (e.g. N,N'-(m-phenylene)bismaleimide) and APF (acetophenone formaldehyde) resins, and combinations thereof.

The rubber composition may preferably comprise one or more tackifier resins, for example alkyl phenol tackifier resins. Example tackifier resins include Koresin^{®} and Ribetack.

The amount of resin may preferably be between 0 to 20 phr, more preferably 0.5 to 15 phr, still more preferably 1 to 12 phr, yet more preferably 1.5 to 10 phr, e.g. 2 to 8 phr. Alternatively, the amount of resin may preferably be between 0 to 20 phr, more preferably between 5 to 15 phr, still more preferably about 5 to 10 phr, still more preferably about 6 to 9 phr.

The rubber composition preferably comprises one or more coupling agents, preferably sulfur and/or silane. The amount of silane may preferably be between 0 to 20 phr, more preferably 1 to 15 phr, still more preferably 2 to 10 phr, yet more preferably 4 to 8 phr, still more preferably about 6 to 8 phr. The amount of sulfur may preferably be between 0 to 20 phr, more preferably 1 to 15 phr, still more preferably 2 to 10 phr, yet more preferably 4 to 8 phr, e.g. about 5 or 6 phr. The total amount of coupling agent may preferably be between 0 to 40 phr, more preferably 1 to 30 phr, still more preferably 4 to 20 phr, yet more preferably 8 to 16 phr, e.g. about 12 or 13 phr.

The rubber composition preferably comprises one or more dispersing agents, preferably stearic acid. The amount of dispersing agent, preferably stearic acid, may preferably be between 0 to 10 phr, more preferably 0.5 to 5 phr, still more preferably 1 to 3 phr, e.g. about 1 or 2 phr.

The rubber composition preferably comprises one or more antioxidants and/or stabilisers, preferably 6PPD and/or TMQ. The amount of 6PPD may preferably be between 0 to 5 phr, more preferably 0.1 to 3 phr, still more preferably 0.2 to 2 phr, yet more preferably 0.3 to 1 phr, e.g. about 0.9 phr. The amount of TMQ may preferably be between 0 to 3 phr, more preferably 0.1 to 2 phr, still more preferably 0.2 to 1 phr, yet more preferably 0.3 to 0.75 phr, e.g. about 0.7 phr. The total amount of antioxidants and/or stabilisers may preferably be between 0 to 5 phr, more preferably 0.2 to 4 phr, still more preferably 0.4 to 2 phr, yet more preferably 0.5 to 1.75 phr, e.g. about 1.5 phr.

The rubber composition preferably comprises one or more accelerators, preferably CBS. The amount of CBS may preferably be between 0 to 5 phr, more preferably 0.1 to 4 phr, still more preferably 0.3 to 2 phr, yet more preferably 0.5 to 1.5 phr, e.g. about 0.6 phr. The total amount of accelerators may preferably be between 0 to 25 phr, more preferably 1 to 20 phr, still more preferably 3 to 15 phr, yet more preferably 5 to 12 phr, e.g. about 9 phr. Alternatively, the total amount of accelerators may preferably be between 0 to 5 phr, more preferably 0.1 to 4 phr, still more preferably 0.3 to 2 phr, yet more preferably 0.5 to 1.5 phr, e.g. about 1 phr.

The rubber composition preferably comprises one or more activators, preferably zinc oxide. The amount of zinc oxide may preferably be between 0 to 25 phr, more preferably 1 to 20 phr, still more preferably 3 to 15 phr, yet more preferably 4 to 10 phr, e.g. about 5.5 phr. The total amount of activators may preferably be between 0 to 25 phr, more preferably 1 to 20 phr, still more preferably 3 to 15 phr, yet more preferably 4 to 10 phr, e.g. about 8 phr.

The rubber composition preferably comprises one or more adhesion promoters such as cobalt. The amount of adhesion promoter may preferably be between 0 to 7.5 phr, more preferably 0.25 to 5 phr, still more preferably 0.5 to 3 phr, yet more preferably 0.6 to 1.75 phr, e.g. about 0.7 phr.

The liquid composition comprises a rubber composition and solvent. It will be understood that the rubber composition is preferably dissolved, preferably substantially entirely dissolved, in the solvent. The liquid composition may additionally comprise one or more further additives. Alternatively, the liquid composition may consist, or consist essentially, of a rubber composition and solvent.

Preferably, the solvent is a solvent suitable for dissolving the rubber composition, examples of which will be known to the skilled person. The process may preferably comprise a step of dissolving the rubber composition in solvent to obtain a liquid composition comprising rubber. The process may also comprise stirring to encourage dissolution, preferably substantially complete dissolution, of the rubber composition in the solvent.

The solvent may comprise water or may be an organic solvent. Organic solvents are preferred. Preferred solvents include THF (e.g. anhydrous THF), xylene, and alkane solvents. Preferred alkane solvents are C₅-C₈ alkane solvents, preferably heptane.

The liquid composition preferably comprises solvent and rubber in a weight (w/w) ratio of from 0.9:0.1 to 0.1:0.9, preferably from 0.75:0.25 to 0.25:0.75, more preferably from 0.55:0.45 to 0.45:0.55, e.g. about 1:1. The amount of solvent may preferably be configured to allow complete dissolution of the rubber composition in the solvent, the exact amount being determinable by the skilled person accordingly.

The inclusion of solvent advantageously provides a means of tuning the viscosity of the liquid composition. In other words, the skilled person can adjust the ratio of solvent : rubber composition to obtain a liquid composition which is of sufficient viscosity to enable coating of the electronic device. Said another way, the skilled person can adjust the ratio of solvent : rubber composition to obtain a liquid composition which is of sufficient viscosity to enable adherence of the liquid composition to the electronic device.

It will be appreciated that both compositions which are too viscous and compositions which are not viscous enough would present difficult in achieving these aims. The skilled person will be able to judge when an appropriate viscosity has been reached, for example when the liquid composition is able to be transferred onto the surface of the electronic device, but without immediately draining off said surface.

Accordingly, the method may preferably comprise adding solvent to the liquid composition and/or removing solvent from the solvent from the liquid composition, e.g. by evaporation. This may be done until the viscosity of the liquid composition is sufficient to enable coating of the electronic device and/or sufficient to enable adherence of the liquid composition to the electronic device. At the same time, preferably this is done such that the liquid composition does not drain off the surface off the electronic device before the drying step can be achieved.

The exact viscosity of the liquid composition is not intended to be particularly limited, as the skilled person will be able to make appropriate adjustments as described above. However, an example viscosity may be in the range of 5 - 20 mPa.s, preferably 7 - 17 mPa.s, more preferably 9-15 mPa.s.

Preferred methods of the present invention comprise steps of:
dissolving the rubber composition in solvent to obtain a liquid composition comprising the rubber composition;
optionally, evaporating solvent from the liquid composition until the viscosity of the liquid composition is sufficient to enable coating of the electronic device;
coating the electronic device with the liquid composition; and
allowing the liquid composition to dry on the electronic device, thereby providing a rubberised electronic device.

Preferred methods of the present invention comprise steps of:
dissolving the rubber composition in solvent to obtain a liquid composition comprising rubber;
optionally, evaporating solvent from the liquid composition until the viscosity of the liquid composition is sufficient to enable adherence of the liquid composition to the electronic device;
coating the electronic device with the liquid composition; and
allowing the liquid composition to dry on the electronic device, thereby providing a rubberised electronic device.

Heat may be applied to accelerate dissolution. The process of the present invention comprises a step of allowing the liquid composition to dry on the electronic device. The results in the formation of a rubber coating on the electronic device.

Drying may be by active means and/or by passive means. Drying means may include air drying, which may be accompanied by supplying a stream of gas, e.g. air or N₂, to accelerate drying. Drying may also incorporate heating to accelerate drying. Heating may be of the neighbouring atmosphere and/or of any aforementioned stream of gas.

As discussed above, the liquid composition may comprise solvent. Drying may be characterised by the evaporation of solvent. Preferably, the solvent is a volatile solvent. This may better facilitate a drying step. Preferably, the drying step is done until all, or substantially all, solvent has evaporated.

Preferably, drying comprises the concentration of the liquid composition.

It will be understood that the drying step results in the formation of a rubber coating on the electronic device. Preferably, the coating can be considered a solid coating and/or a dried coating. The coating will be directly adhered to the electronic device, in contrast to traditional sandwiching methods, where the electronic device is merely sandwiched - i.e. reversibly positioned - in the middle of a double layer of rubber material.

The process of the present invention may include repeated steps of coating and drying. For example, the process may include two cycles of coating and drying, such that the process comprises:
coating the electronic device with a liquid composition as hereinbefore defined;
allowing the liquid composition to dry on the electronic device;
further coating the electronic device with a liquid composition as hereinbefore defined; and
allowing the liquid composition to dry on the electronic device, thereby providing a rubberised electronic device.

The number of cycles is not particularly limited, but may for example be 2, 3, or 4 cycles, preferably 2. The liquid composition is preferably the same liquid composition in each coating step.

The number of cycles may be chosen such that the final product has a coating of desired thickness. In other words, the process preferably comprises repeated steps of coating and drying until the coating has a desired thickness.

Alternatively, the process may preferably comprise just one cycle of coating and drying. In other words, the process may comprise just one coating step and just one drying step.

The process hereinbefore described has been termed a process for rubberising an electronic device for a tyre. The process could equivalently be considered a process for applying a rubber coating to an electronic device for a tyre. As previously described, preferably the rubber coating is an insulating rubber coating. The process is thus preferably a process for insulating an electronic device.

### Rubberised electronic device

The present invention also relates to a product, i.e. a rubberised electronic device, obtained or obtainable, preferably obtained, by a process as hereinbefore described.

The process of the present invention yields an electronic device having a rubber coating. It will be understood that the coating is directly adhered to the electronic device. This contrasts with traditional sandwiching processes, where the electronic device is not considered to be coated, but is merely sandwiched - i.e. reversibly positioned - in a double layer of insulating compound, with no direct adherence. It will thus be understood that he device of the present invention is preferably not a sandwiched device.

Preferably, the average dry thickness of the coating is less than 0.8 mm, preferably less than 0.6 mm, more preferably less than 0.4 mm, yet more preferably less than 0.25 mm. These low thicknesses advantageously make the device obtained by the process of the present invention less intrusive and also reflective of the lower amount of material used in the process. This contrasts with traditional sandwiching processes, where thicker sandwiching layers are used.

Preferably, greater than 50%, more preferably greater than 60%, 70%, 80%, 90%, 95%, 97%, 98% or 99%, still more preferably substantially all of the surface area of the electronic device is coated. In other words, preferably greater than 50%, more preferably greater than 60%, 70%, 80%, 90%, 95%, 97%, 98% or 99%, still more preferably substantially all of the surface area of the electronic device is rubberised.

Such a coverage may be reflective of the coating method of the process as hereinbefore described. Using the liquid composition, a high level of surface coverage, which may be relatively uniform, is achievable. Such a large coverage may improve the insulating effect of the rubberization.

The electronic device obtained by the process of the present invention can be considered a rubberised electronic device. In certain embodiments as descried in more detail above, the obtained electronic device can be considered an insulated electronic device, and/or an insulated rubberised electronic device.

As described previously, it has been found that the electronic devices obtained or obtainable by the process as hereinbefore described represent less invasive products for use in tyres. The devices reduce the defects normally associated with the use of traditional sandwiched devices, whilst maintaining a good level of readability.

The present invention also relates to a rubberised electronic device for a tyre, the rubberised electronic device comprising:
an electronic device and a rubber coating.

It will be understood that such a rubberised electronic device is obtainable, preferably obtained, according to a process as hereinbefore described. Preferably, the rubber coating comprises an insulating compound.

As previously described, traditional electronic devices for tyres may be sandwiched between two layers of rubber compound. Preferably, the rubberised electronic device of the present invention is not sandwiched.

In contrast, the rubberised electronic device of the present invention comprises a rubber coating. It will be understood that the rubber coating is adhered directly to the electronic device. This contrasts with traditional sandwiched devices where the electronic device is not considered to be coated, but is merely sandwiched - i.e. reversibly positioned - in a double layer of insulating material, with no direct adherence.

Said another way, in the rubberised electronic device described herein, the rubber coating and the electronic device cannot be distinguished. This is not the case with the currently used sandwiched devices, where the rubber sandwich and the electronic device are distinguishable and dismountable.

Preferred features of the rubberised electronic devices of the present invention - e.g., with respect to the type of electronic device, rubber compositions, coating thickness and coverage - are as hereinbefore described.

Preferably, the rubber coating is directly adhered to the electronic device. Such an adherence is achievable by the process hereinbefore described. Preferably, the coating is present at all degrees of rotation around the long axis of the electronic device. Such a coating is achievable by the process hereinbefore described. Preferably, the coating has a dry thickness profile differing by no more than 0.2 mm, more preferably no more than 0.1 mm, still more preferably no more than 0.05 mm with each degree of rotation around the long axis of the electronic device. Such a coating is achievable by the process hereinbefore described.

Preferably, the rubber coating is an insulating rubber coating. In other words, preferably the coating is of a rubber compound suitable for insulating the electronic device. In such a case, the electronic device can be termed an insulated electronic device, or an insulated rubberised device.

As described previously, it has been found that the electronic devices obtained or obtainable by the process as hereinbefore described represent less invasive products for use in tyres. The devices reduce the defects normally associated with the use of traditional sandwiched devices, whilst maintaining a good level of readability.

As previously discussed, electronic devices are sometimes pre-coated with a layer or coating of material by the electronic device manufacturer, which may serve roles such as to promote adhesion with the rubber of the tyre. The present invention therefore encompasses electronic devices with a rubber coating in addition to coatings of material such as RFL, Chemlok^{®}, or any other material used to enhance adhesion with rubber compounds.

Preferably, the rubber coating is environment-exposed, i.e. an external or outermost coating. Preferably, the rubber coating is not a latex, or latex-based, coating. Preferably, the rubber coating is an insulating rubber coating. The electronic device is preferably an insulated electronic device.

### Use in tyres

The present invention also relates to the use of rubberised electronic devices as hereinbefore described in tyres. As previously described, electronic devices can be used for various applications in tyres, including in communicating information about the tyre to a user. It has been found that, when used in tyres, the rubberised electronic devices of the present invention have reduced defects as compared to traditional sandwiched devices, whilst maintaining a good level of readability.

One way of using electronic devices in tyres is to embed them into them into the tyre. This typically involves applying the electronic device between two layers of the tyre during normal production. This is often conducted at a building machine in tyre production.

The present invention thus relates to use of a rubberised electronic device as hereinbefore described for embedding into a tyre. The present invention also analogously relates to a method of embedding a rubberised electronic device into a tyre, the method comprising:
providing a rubberised electronic device as hereinbefore described; and
embedding the rubberised electronic device into a tyre.

Providing a rubberised electronic device may be by sourcing a "ready-made" device, or may preferably involve preparing the device. A preferred method is thus a method of embedding a rubberised electronic device into a tyre, the method comprising:
rubberising an electronic device according to a process as hereinbefore described; and
embedding the rubberised electronic device into a tyre.

Means of embedding will be known to the skilled person. The exact position of embedding is not intended to be particularly limited. However, example positions include between the sidewall rubber and the body ply, between different body ply layers, between the tread cap and the nylon cap, between the nylon cap and the steel belt, or between the body ply and the inner liner.

Another way of using electronic devices in tires is to patch them at a patching site on the tyre. This involves applying the rubberised electronic device to the patch site before curing. The curing process then integrates the rubberised electronic device into the tyre.

Patching traditional sandwiched electronic devices in this way results in the appearance of defects at the patch site. In contrast, it has been found that the rubberised electronic devices of the present invention do not suffer from such defects. Without wishing to be bound by any theory, it is thought that the less invasive nature of the electronic devices of the present invention, which may be associated with a rubber coating of minimal thickness, contributes to the improved performance.

The present invention thus relates to use of a rubberised electronic device as hereinbefore described for patching into a tyre. The present invention also analogously relates to a method of patching a rubberised electronic device onto a patch site of a tire, the method comprising:
providing a rubberised electronic device as hereinbefore described; and
patching the rubberised electronic device onto the patch site.

Providing a rubberised electronic device may be by sourcing a "ready-made" device, or may preferably involve preparing the device. A preferred method is thus a method of patching a rubberised electronic device onto a patch site of a tire, the method comprising:
rubberising an electronic device according to a process as hereinbefore described; and
patching the rubberised electronic device onto the patch site.

Means of patching will be known to the skilled person. Preferably, the patch site is on the inner liner of the tyre. Preferably, patching comprises applying the rubberised electronic device to the green patch site before curing. Preferably, the method also comprises curing the tyre.

Preferably, patching comprises covering the electronic device with a patch of material which matches the material at the patch site. The patch of material may "match" the material at the patch site because it is of the same, or substantially the same, composition as the material at the patch site. Alternatively, the patch of material may "match" the material at the patch site because it has similar properties - e.g. dynamic properties, modulus (e.g. elastic modulus), hardness, and/or rheological behaviour - to the material at the patch site. The purpose of covering the electronic material in this way may be to isolate and protect the electronic device. As compared with a sandwiching technique, this uses less compound, is less intrusive, provides less hindrance, and offers reduced discontinuity in the tyre layers.

Without wishing to be bound by any theory, matching the material in this way may contribute to the reduction in defects following patching. This approach cannot be replicated in the same way with traditional sandwiched devices. This is because the material used for sandwiching (often selected for its insulating properties) will typically not match the material at the patch site on the tyre. Given the highly thick and invasive nature of the sandwiched device, the mismatch in material may lead to the formation of defects. The rubberised electronic devices of the present invention thus benefit from a less invasive character, characterised by a thin coating directly adhered to the electronic device, which can more easily be integrated into the patch site.

A preferred method is thus a method of patching a rubberised electronic device onto a patch site of a tire, the method comprising:
providing a rubberised electronic device as hereinbefore described; and
applying the rubberised electronic device to the patch site;
covering the rubberised electronic device with a patch of material which matches the material at the patch site; and
curing the tyre.

### Tyres

The present invention also relates to a tyre obtained or obtainable according to a method as hereinbefore described. The present invention also relates to tyres comprising a rubberised electronic device as hereinbefore described. Preferably, the rubberised electronic device is embedded in the tyre, or patched onto a patch site on the tyre. In all aspects of the present invention, tyres are preferably pneumatic tyres.

The tyres of the present invention are more desirable to end users, showing reduced levels of defects, as compared with tyres comprising traditional sandwiched electronic devices. At the same time, performance levels of the electronic device are maintained, which is again desirable to the user of the tyre.

### Preferred Embodiments

The following are certain preferred embodiments of the present invention.

A process for rubberising an electronic device for a tyre, preferably for insulating the electronic device, the process comprising:
coating the electronic device with a liquid composition; and
allowing the liquid composition to dry on the electronic device, thereby providing a rubberised electronic device,
wherein the liquid composition comprises:
   a rubber composition; and
   an organic solvent.

A process for rubberising an electronic device for a tyre, preferably for insulating the electronic device, the process comprising:
coating the electronic device with a liquid composition; and
allowing the liquid composition to dry on the electronic device, thereby providing a rubberised electronic device,
wherein the liquid composition comprises:
   a rubber composition, the rubber composition comprising green (natural) rubber; and, an insulating filler, preferably selected from silica-based fillers, e.g. silica; aluminium-based fillers, e.g. aluminium hydroxide; calcium-based fillers, e.g. calcium carbonate; barium-based fillers, e.g. barium sulphate; and white non-reinforcing fillers, e.g. clay, kaolin and talc; and
   a solvent, preferably an organic solvent.

A process for rubberising an electronic device for a tyre, preferably for insulating the electronic device, the process comprising:
coating the electronic device with a liquid composition; and
allowing the liquid composition to dry on the electronic device, thereby providing a rubberised electronic device,
wherein the liquid composition comprises:
   a rubber composition, the rubber composition comprising green (natural) rubber; and, silica, preferably in amount of from 30 to 90 phr, more preferably from 40 to 85 phr, still more preferably from 50 to 80 phr, still more preferably from 60 to 75 phr;
   a solvent, preferably an organic solvent.

A process for rubberising an electronic device for a tyre, preferably for insulating the electronic device, the process comprising:
coating the electronic device with a liquid composition; and
allowing the liquid composition to dry on the electronic device, thereby providing a rubberised electronic device,
wherein the liquid composition comprises:
   a rubber composition; and
   a solvent, preferably an organic solvent,
wherein the rubber composition comprises:
   green (natural) rubber; and, an insulating filler, preferably selected from silica-based fillers, e.g. silica; aluminium-based fillers, e.g. aluminium hydroxide; calcium-based fillers, e.g. calcium carbonate; barium-based fillers, e.g. barium sulphate; and white non-reinforcing fillers, e.g. clay, kaolin and talc,
   the total amount of insulating filler in the rubber composition preferably being from 30 to 90 phr, more preferably from 40 to 85 phr, still more preferably from 50 to 80 phr, still more preferably from 60 to 75 phr, and
   wherein conductive filler represents less than 10 %, more preferably less than 8 %, still more preferably less than 6 %, still more preferably less than 4 %, still more preferably less than 2 %, still more preferably less than 0.5 %, still more preferably about 0 % of the total amount of filler in the rubber composition, on a phr basis.

### FIGURES

Figure 1A and 1B each show a different view of a traditional sandwiched electronic device, as prepared in the Examples. The electronic device is sandwiched centrally between two layers of rubber. Figure 1B shows the dimensions of the sandwiched device.
Figure 2 shows a rubberised electronic device prepared according to the process of the present invention, as prepared in the Examples. The device comprises a rubber coating directly adhered to the device, having a low and relatively uniform thickness.
Figure 3 shows defects at a patching site resulting from the patching of traditional sandwiched devices, as discussed in the Examples.
Figure 4 shows the absence of defects at a patching site following patching of a device according to the present invention, as discussed in the Examples.

### EXAMPLES

The invention will now be described by the following non-limiting examples.

### Materials

Radio frequency identification devices (RFID) were obtained from HANA or Primo1D.

Tyres used were PSR tyres obtained from Bridgestone and prepared using standard processes.

All materials were obtained from commercial sources, unless specified otherwise.

### Preparation of Comparative Example 1 (CE1)

The purpose of this procedure was to prepare a traditional sandwiched electronic device to act as a comparative example.

Two strips of rubber compound were prepared according to the formulation in Table 1. Each layer was 0.8 mm in thickness, 10 mm in width, and 70 mm in length.

**TABLE 1**

| **MATERIAL** | **PHR** |
|---|---|
| Natural Rubber | 100.00 |
| Silica | 70.00 |
| Zinc Oxide | 5.4 |
| Stearic Acid | 1.30 |
| Silane | 7.20 |
| Resin | 8.00 |
| Cobalt | 0.70 |
| 6PPD | 0.90 |
| Sulfur (20% oil extended) | 5.50 |
| CBS | 0.60 |
| DPG | 0.60 |
| TMQ | 0.70 |
| BMI | 0.90 |

An RFID was sandwiched centrally between the two strips using an automated machine process.

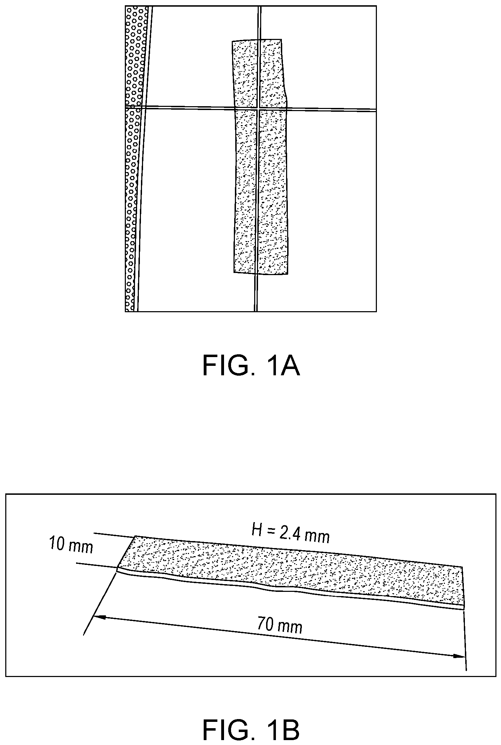

The resultant sandwiched RFID (CE1) is shown in Figure 1A and 1B.

### Preparation of Example 1 (Ex. 1)

The purpose of this procedure was to prepare an example rubberised electronic device according to the process of the present invention.

Green insulating rubber having a composition according to Table 1 was dissolved in THF in a ratio of 1:1 (w/w) and the mixture stirred until complete dissolution of the rubber. This yielded a liquid composition comprising rubber.

THF was allowed to evaporate until the viscosity of the rubber solution was such that the rubber solution would be able to remain adhered to the RFID following the immersion and then removal of the RFID from the rubber solution. In other words, the viscosity was sufficient to coat the RFID.

The RFID was then immersed into a bath of the rubber solution in order to coat the RFID. The RFID was removed from the rubber solution and the coating allowed to dry out and all THF allowed to evaporate. This yielded a rubberised RFID with a dried rubber coating.

Repeated steps of immersion, removal, and drying were performed until the RFID was rubberised with a dried rubber coating of average thickness 0.2 mm.

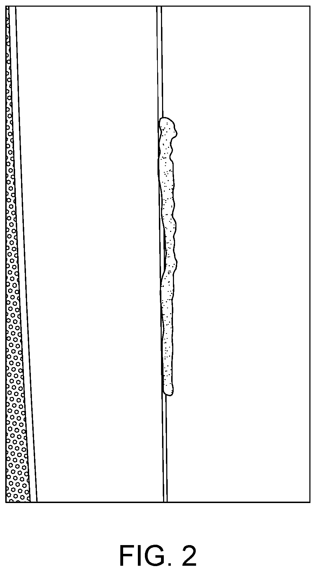

The resultant rubberised RFID with rubber coating (Ex.1) is shown in Figure 2.

### Defect inspection test

The purpose of this test was to assess the impact of applying CE1 and Ex.1 at a patch site on the inner liner on the production of defects in the resulting tyres.

Ex.1 and CE1 were applied to the inner liner of a pneumatic tyre according to the following methods.

CE1 (sandwiched RFID) was applied to the green inner liner surface of a tyre before tyre curing. The tyre was then cured. Three tests were run using three different tyres.

Ex.1 (RFID rubberized with liquid rubber) was applied on the green inner liner surface of a tyre before tyre curing. The electronic device was covered by a low gauge patch of a material matching the material of the inner liner such the electronic device remained in place on the inner liner surface of the tyre. The tyre was then cured.

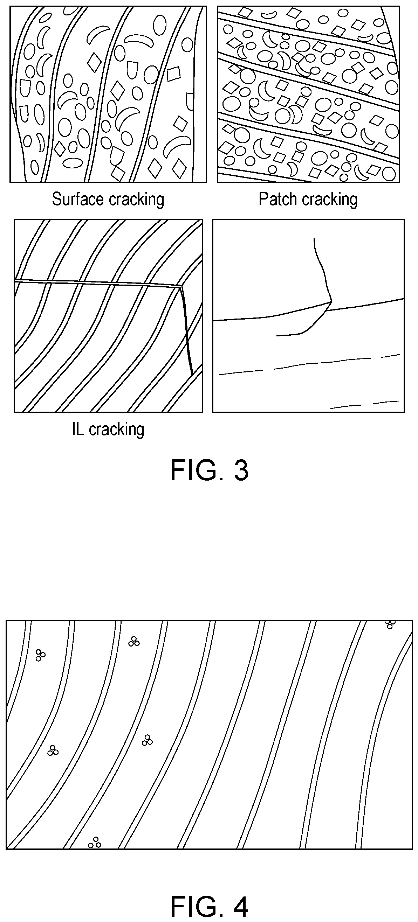

Figure 3 shows the appearance of the patch site for each example following curing. For the tyres made with CE1, various defects were observed across the three different tyres. These can be categorised as surface cracking (top left), patch cracking (top right), inner liner cracking (bottom left), and peeling and colour mismatch (bottom right). In contrast, no defects were apparent on the tyre made with Ex.1, as shown in Figure 4.

Accordingly, methods using Ex.1 reduced the instances of defects in the resulting tyres, as compared with methods using CE1.

### Read distance test

The purpose of this test was to compare the device performance of Ex.1 and CE1 when embedded into a tyre. RFID readability from an embedded position was assessed for both Ex.1 and CE1.

CE1 and Ex.1 were each embedded between two layers of a tyre during tyre building at a building machine.

Read distance was assessed according to *ISO20912:2020* - *Conformance test methods for RFID enabled tyres.* Performance was assessed when using a standard EU RFID band frequency of 865.6 - 867.6 MHz as well as when using a standard North American RFID band frequency of 902-928 MHz. Four measurements were taken for each RFID layout at each band, using a different RFID each time.

The results are shown in Table 2.

**TABLE 2**

| | **Maximum Reading Distance (m)** | |
|---|---|---|
| **Example** | **EU Band** | **NA band** |
| Ex.1 | 7.39 | 6.04 |
| | 7.74 | 6.08 |
| | 7.74 | 6.23 |
| | 7.39 | 6.47 |
| CE1 | 7.06 | 5.38 |
| | 7.74 | 7.77 |
| | 6.26 | 4.51 |
| | 8.39 | 6.10 |

The results show that the read distance of Ex.1 at both bands is comparable with the read distance of CE1, with both Ex.1 and CE1 exhibiting a desirable level of RFID performance.

### Summary

In summary, incorporating the rubberised electronic devices of the present invention into tyres has been shown to yield products having fewer structural and visual defects as compared with the incorporation of traditional sandwiched devices. For example, tyres comprising the rubberised electronic devices of the present invention had comparatively fewer defects, such as cracks or colour differences, at the site of embedding. It was also found that desirable levels of readability performance were maintained when using the rubberised electronic devices of the present invention, as compared with traditional sandwiched devices.

The rubberising process of the present invention has thus been shown to enable improved visual appearance of tyres as well as maintained device performance. The process is also desirably less invasive and advantageously uses a reduced amount of rubber than sandwiching methods.

## Claims

1. A process for rubberising an electronic device for a tyre, the process comprising:
coating the electronic device with a liquid composition; and
allowing the liquid composition to dry on the electronic device, thereby providing a rubberised electronic device,
wherein the liquid composition comprises:
a rubber composition; and
a solvent.

2. A process according to claim 1, wherein the solvent is an organic solvent, preferably wherein the solvent is a volatile solvent, more preferably wherein the solvent is one or more selected from the group consisting of THF, xylene, and C₅-C₈ alkane solvents.

3. A process according to claim 1 or 2, wherein the liquid composition preferably comprises solvent and rubber in a w/w ratio of from 0.75:0.25 to 0.25:0.75, more preferably from 0.55:0.45 to 0.45:0.55.

4. A process according to any preceding claim, wherein the rubber composition comprises green rubber, preferably in an amount of 100 phr.

5. A process according to any preceding claim, wherein the rubber composition comprises an insulating filler, preferably selected from silica-based fillers, e.g. silica; aluminium-based fillers, e.g. aluminium hydroxide; calcium-based fillers, e.g. calcium carbonate; barium-based fillers, e.g. barium sulphate; and white non-reinforcing fillers, e.g. clay, kaolin and talc.

6. A process according to any preceding claim, wherein the rubber composition comprises silica, preferably in amount of from 30 to 90 phr, more preferably from 40 to 85 phr, still more preferably from 50 to 80 phr, still more preferably from 60 to 75 phr.

7. A process according to any preceding claim, wherein coating comprises immersing the electronic device in the liquid composition.

8. A process according any preceding claim, wherein the process comprises:
dissolving a rubber composition in solvent, preferably volatile solvent, to obtain a liquid composition comprising rubber;
optionally, evaporating solvent from the liquid composition until the viscosity of the liquid composition is sufficient to enable coating of the electronic device;
coating the electronic device with the liquid composition; and
allowing the liquid composition to dry on the electronic device, thereby providing a rubberised electronic device.

9. A rubberised electronic device obtained or obtainable by a process according to any preceding claims, preferably comprising a coating of the rubber composition on the electronic device having a thickness of less than 0.8 mm, preferably less than 0.6 mm, more preferably less than 0.4 mm, yet more preferably less than 0.25 mm.

10. Use of a rubberised electronic device according to claim 9 in a tyre, preferably for embedding into a tyre or patching into a tyre.

11. A method of embedding a rubberised electronic device into a tyre, the method comprising:
providing a rubberised electronic device according to claim 9, preferably by rubberising an electronic device according to the process of any one of claims 1 to 8; and
embedding the rubberised electronic device into a tyre.

12. A method of patching a rubberised electronic device onto a patch site of a tyre, the method comprising:
providing a rubberised electronic device according to claim 9, preferably by rubberising an electronic device according to the process of any one of claims 1 to 8; and
patching the electronic device onto the patch site.

13. A method according to claim 12, the method comprising:
providing a rubberised electronic device according to claim 9, preferably by rubberising an electronic device according to the process of any one of claims 1 to 8;
applying the rubberised electronic device to the patch site;
covering the rubberised electronic device with a patch of material which matches the material at the patch site; and
curing the tyre.

14. A tyre obtained or obtainable by a method according to any one of claims 11 to 13 and/or a tyre comprising a rubberised electronic device according to claim 9.

15. A process, method, or product according to any preceding claim, wherein said electronic device is a communication device, preferably an RFID.
